# FASCICULE DE BREVET EUROPEEN

(11) **EP 3 673 167 B1**
(45) Date de publication et mention de la délivrance du brevet: **08.10.2025**
(21) Numéro de dépôt: 18783054.2
(22) Date de dépôt: 22.08.2018
(51) Int. Cl.: F02K 1/82, F02K 1/44, B32B 3/12, B29C 70/02, B29D 24/00

(54) **PANNEAU STRUCTURAL ET/OU ACOUSTIQUE DE NACELLE D'ENSEMBLE PROPULSIF D'AÉRONEF ET PROCÉDÉ DE FABRICATION S'Y RAPPORTANT**
STRUKTUR- UND/ODER AKUSTIKPLATTE EINER GONDEL EINER FLUGZEUGANTRIEBSANORDNUNG UND ZUGEHÖRIGES HERSTELLUNGSVERFAHREN
STRUCTURAL AND/OR ACOUSTIC PANEL OF A NACELLE OF AN AIRCRAFT PROPULSION ASSEMBLY AND RELATED MANUFACTURING METHOD

(30) Priorité: 25.08.2017 FR 1757886
(43) Date de publication de la demande: 01.07.2020
(73) Titulaire: Safran Nacelles, 76700 Gonfreville-l'Orcher (FR); Safran Ceramics, 33185 Le Haillan (FR)
(72) Inventeur: DESJOYEAUX, Bertrand, 76700 Gonfreville L'Orcher (FR); SILVA DE VASCONCELLOS, Davi, 76700 Gonfreville L'Orcher (FR); BOUILLON, Florent, 33290 Parempuyre (FR); DELEHOUZE, Arnaud, 33320 Le Taillan Medoc (FR)
(74) Mandataire: Germain Maureau
(86) Numéro de dépôt international: PCT/FR2018/052090
(87) Numéro de publication internationale: WO 2019/038505

(56) Documents cités:
- WO-A1-2014/200499
- WO-A1-2017/103390
- DE-A1- 102014 011 775

## Description

La présente invention se rapporte au domaine des nacelles d'ensemble propulsif d'aéronef. Cet ensemble propulsif peut comprendre un turboréacteur ou une turbomachine. Cet aéronef peut être un avion ou un hélicoptère.

Plus spécifiquement, la présente invention concerne un panneau structural et/ou acoustique, par exemple pour composant de tuyère d'échappement tel qu'un cône d'éjection ou une buse primaire de nacelle de turboréacteur d'aéronef.

Dans ce domaine, il est connu de mettre en œuvre des panneaux structuraux communément appelés « panneaux sandwiches ». Un tel panneau comprend typiquement deux peaux et une structure intermédiaire reliant les deux peaux. Typiquement, la structure intermédiaire consiste en des cloisons transversales contribuant à la tenue structurale du panneau en assurant notamment la liaison entre les deux peaux et supportant des contraintes mécaniques et thermiques. Une telle structure intermédiaire permet de réduire la masse globale du panneau.

Un tel panneau peut en outre avoir une fonction de traitement acoustique afin d'atténuer le bruit généré par l'ensemble propulsif. Pour ce faire, les cloisons transversales de la structure intermédiaire sont agencées de manière à délimiter des alvéoles. L'une des peaux, exposée à la source de bruit, est typiquement percée de sorte que les alvéoles forment des cavités de Helmholtz.

Les documents FR 3 039 148 A1, WO 2017/103390 A1 et DE 10 2014 011775 A1 décrivent de tels panneaux ainsi que des procédés de fabrication de tels panneaux.

Toutefois, les panneaux structuraux connus dans l'état de la technique antérieure, destinés à des applications aéronautiques, notamment pour les tuyères d'échappement, sont relativement onéreux notamment en raison des procédés de fabrication spécifiques des matériaux utilisés (par exemple, superalliages ou composites céramiques).

Un but de la présente invention est de proposer un panneau pour nacelle d'ensemble propulsif d'aéronef offrant de bonnes performances mécaniques et structurales à moindre coût.

A cet effet, l'invention se rapporte à un panneau pour nacelle d'ensemble propulsif d'aéronef, comprenant deux peaux et une structure alvéolaire entre ces deux peaux, la structure alvéolaire comprenant des cloisons transversales délimitant des alvéoles.

De préférence, les peaux peuvent être des peaux fibreuses. Par exemple, les peaux peuvent comprendre des fibres d'un matériau céramique.

Selon l'invention, ce panneau comprend des plis comportant chacun :
- au moins une partie centrale s'étendant transversalement de manière à former au moins une partie d'au moins une cloison transversale, et
- au moins une partie périphérique s'étendant le long de l'une au moins des peaux.

Dans le présent document, les expressions « partie centrale » et « partie périphérique » s'entendent relativement à la localisation de la partie concernée dans le panneau. Ainsi, une partie d'un pli qui s'étend (ou qui a vocation à s'étendre) transversalement entre les deux peaux est dite centrale, tandis qu'une partie d'un pli qui s'étend (ou qui a vocation à s'étendre) le long d'une peau est dite périphérique.

La présence de plis ainsi agencés renforce la tenue structurale du panneau par rapport à un panneau de l'état de la technique antérieure dans lequel les peaux sont reliées entre elles par de simples cloisons transversales ou plis s'étendant transversalement et ne comprenant aucune partie s'étendant le long de l'une ou des deux peaux.

Des plis ainsi agencés permettent de former les alvéoles et de rendre celles-ci indépendantes les unes des autres, au moins acoustiquement, sans pièces ou composants complémentaires. De plus, la masse du panneau est optimisée puisqu'il n'est pas nécessaire que les plis entourent totalement chaque alvéole.

De plus, la fabrication d'un tel panneau est relativement économique et facile, l'agencement des plis pouvant être réalisé par drapage de plis textiles.

Ainsi, de préférence, les plis peuvent être des plis textiles.

Dans un mode de réalisation, les plis peuvent être des plis fibreux.

De tels plis fibreux peuvent de préférence comprendre des fibres d'un matériau céramique.

Les fibres peuvent être minérales, organiques ou céramiques.

Les inventeurs ont constaté que des plis fibreux confèrent au panneau de bonnes propriétés mécaniques. Il est cependant envisageable d'utiliser des plis à matrice céramique sans fibres, matériau classiquement utilisé pour fabriquer de tels panneaux. Plus généralement, les plis peuvent être à matrice céramique ou à matrice géopolymère ou à matrice thermodure, et peuvent comprendre ou non des fibres.

Avantageusement, dans la structure alvéolaire selon l'invention, la tenue mécanique entre la partie centrale du pli fibreux et la peau voisine est grandement améliorée par la présence de fibres contenues dans le pli et s'étendant continument depuis la partie centrale à la partie périphérique s'étendant le long de ladite peau.

Dans un mode de réalisation, pour un ou plusieurs plis, l'au moins une partie centrale peut s'étendre transversalement depuis l'une des peaux jusqu'à l'autre peau.

Autrement dit, selon ce dernier mode de réalisation, au moins un pli peut comprendre une partie, en l'occurrence une partie dite centrale, qui s'étend entre les deux peaux sur toute l'épaisseur de la structure alvéolaire, l'épaisseur de la structure alvéolaire étant considérée comme la distance entre les deux peaux au moins au niveau de cette partie centrale du pli concerné. A titre d'exemple non limitatif, un pli peut comprendre une partie centrale constituant à lui seul une cloison transversale. Dans un autre exemple alternatif conforme à ce mode de réalisation, une cloison transversale peut comprendre une superposition d'une partie centrale respective de deux plis.

Dans un mode de réalisation, un ou plusieurs plis peuvent comporter chacun au moins une première partie périphérique s'étendant le long de l'une des peaux et au moins une deuxième partie périphérique s'étendant le long de l'autre peau.

Autrement dit, selon ce dernier mode de réalisation, au moins un pli peut comprendre au moins deux parties périphériques qui s'étendent le long de chacune des deux peaux respectives du panneau.

Les deux derniers modes de réalisation peuvent bien entendu être combinés de sorte qu'un pli peut par exemple comprendre une partie centrale et deux parties périphériques de part et d'autre de la partie centrale. Dans cet exemple, l'une des parties périphériques peut s'étendre le long de l'une des peaux, la partie centrale peut s'étendre transversalement entre les deux peaux sur toute l'épaisseur de la structure alvéolaire, et l'autre partie périphérique peut s'étendre le long de l'autre peau. Cet exemple est non limitatif est de nombreuses variantes peuvent être envisagées sur cette base, notamment les variantes décrites ci-dessous.

Dans une première variante, pour un ou plusieurs plis, ladite première partie périphérique peut s'étendre le long de l'une des peaux de manière à délimiter au moins une partie d'au moins une première alvéole, et ladite deuxième partie périphérique peut s'étendre le long de l'autre peau de manière à délimiter au moins une partie d'au moins une deuxième alvéole adjacente à la première alvéole. Un pli ainsi agencé peut ainsi avoir une forme en « Z », la barre oblique du « Z » représentant la partie centrale du pli, les barres horizontales du « Z » représentant les parties périphériques respectives du pli.

Dans une deuxième variante, pour un ou plusieurs plis, ladite première partie périphérique peut s'étendre le long de l'une des peaux de manière à délimiter au moins une partie d'au moins une alvéole, et ladite deuxième partie périphérique peut s'étendre le long de l'autre peau de manière à délimiter au moins une partie de cette même alvéole. Un pli ainsi agencé peut ainsi avoir une forme en « C », la partie sensiblement verticale du « C » représentant la partie centrale du pli, les parties sensiblement horizontales du « C » représentant les parties périphériques respectives du pli.

Dans une troisième variante, un ou plusieurs plis peuvent comporter chacun : d'une part, une première partie centrale s'étendant transversalement de manière à former au moins une partie d'au moins une première cloison transversale d'au moins une alvéole ; et, d'autre part, une deuxième partie centrale s'étendant transversalement de manière à former au moins une partie d'au moins une deuxième cloison transversale de cette même alvéole. Un pli ainsi agencé peut ainsi avoir une forme en « U » ou Omega (« Ω »), les parties verticales du « U » ou du Omega représentant les parties centrales respectives du pli, la partie sensiblement horizontale du « U » ou de sommet supérieur du Omega représentant l'au moins une partie périphérique du pli délimitant cette même alvéole.

Cette troisième variante permet notamment d'obtenir, entre la peau et une alvéole enveloppée ou constituée par un tel pli, une épaisseur de pli constante. Une épaisseur de pli constante améliore notamment les propriétés acoustiques du panneau lorsqu'un tel pli sépare une alvéole formant cavité de Helmholtz et une peau du panneau, ou lorsque ce pli constitue une partie d'une peau délimitant une alvéole formant cavité de Helmholtz.

Quelle que soit la variante, le ou les plis ainsi agencés peuvent comprendre d'autres parties centrales et/ou périphériques. Par exemple, un pli selon la troisième variante peut comprendre, outre une partie périphérique s'étendant le long de l'une des peaux de manière à délimiter l'alvéole concernée (correspondant au sommet de l'Omega, dans l'exemple ci-dessus), deux autres parties périphériques s'étendant le long de l'autre peau. Ces autres parties périphériques figurées par la base de l'Omega peuvent s'étendre chacune le long de ladite autre peau soit de manière à délimiter respectivement au moins une partie de la même alvéole soit de manière à délimiter au moins une partie d'une alvéole voisine et adjacente à la partie centrale d'où s'étend la partie périphérique, par exemple.

Dans un mode de réalisation, pour un ou plusieurs plis, ladite partie centrale peut s'étendre longitudinalement de manière à former au moins une partie de plusieurs cloisons transversales adjacentes. Ces cloisons transversales adjacentes peuvent être des cloisons transversales d'une même alvéole et/ou de plusieurs alvéoles adjacentes. L'expression « cloisons transversales adjacentes » désigne des cloisons transversales adjacentes deux par deux, chacune de ces cloisons transversales n'étant pas nécessairement adjacentes à toutes les autres cloisons transversales.

Ce dernier mode de réalisation renforce encore davantage la tenue structurale du panneau, un tel pli constituant ainsi un renfort relativement étendu dans le panneau, en particulier non limité à la dimension d'une unique alvéole lorsque lesdites cloisons transversales adjacentes sont des cloisons transversales de plusieurs alvéoles.

La présente invention concerne aussi :
- un composant de tuyère d'échappement de nacelle d'ensemble propulsif d'aéronef, par exemple un cône d'éjection ou une buse primaire d'une nacelle de turboréacteur, comprenant un tel panneau ;
- un composant de nacelle de turboréacteur d'aéronef comprenant un tel panneau ;
- une nacelle de turboréacteur ou de turbomachine d'aéronef comprenant un tel panneau.

Selon un autre aspect, la présente invention concerne en outre un procédé de fabrication d'un panneau pour nacelle d'ensemble propulsif d'aéronef, ce panneau comprenant deux peaux et une structure alvéolaire entre ces deux peaux, la structure alvéolaire comprenant des cloisons transversales délimitant des alvéoles.

Ce procédé comprend une étape de drapage dans laquelle au moins un pli est disposé sur au moins un élément de moule polyédrique ou sensiblement polyédrique (les arêtes de polyèdre pouvant être émoussées, ou chanfreinées, ou arrondies). L'au moins un élément de moule comporte des faces latérales, une face supérieure et une face inférieure.

De préférence, les faces supérieure et inférieure de l'au moins un élément de moule peuvent être agencées de sorte que, lorsque les peaux du panneau sont placées sur l'au moins un élément de moule, ces faces supérieure et inférieure sont respectivement en vis-à-vis des peaux du panneau.

Selon l'invention, lors de l'étape de drapage :
- une partie centrale de l'au moins un pli est disposée sur au moins une partie d'au moins une face latérale de l'au moins un élément de moule,
- une partie périphérique de l'au moins un pli est disposée sur au moins une partie de la face supérieure et/ou inférieure de l'au moins un élément de moule.

Ainsi, un panneau sandwich peut être obtenu en plaçant entre les deux peaux un ensemble d'éléments de moule adjacents les uns aux autres, l'étape de drapage de ces éléments de moule permettant de former le contour des alvéoles du panneau.

Le procédé comprend aussi une étape d'extraction de l'au moins un élément de moule.

L'étape d'extraction est de préférence réalisée de sorte que l'au moins un élément de moule définisse au moins une alvéole respective, c'est-à-dire de sorte qu'un élément de moule donné définisse une alvéole donnée de la structure alvéolaire. Autrement dit, chaque élément de moule utilisé dans le procédé de fabrication peut de préférence correspondre à une alvéole respective du panneau.

Selon l'invention, ladite partie centrale de l'au moins un pli forme au moins une partie d'au moins une desdites cloisons transversales du panneau, et ladite partie périphérique de l'au moins un pli s'étend le long d'au moins une peau du panneau.

Un tel procédé permet de fabriquer un panneau selon l'invention de manière simple et à moindre coût.

En particulier, un tel procédé permet de draper successivement et/ou parallèlement plusieurs éléments de moule et/ou plusieurs rangées d'éléments de moule de manière relativement simple, ce procédé autorisant notamment de positionner les éléments de moule selon un agencement flexible ou reconfigurable au cours de sa mise en œuvre.

De plus, l'invention permet de fabriquer un tel panneau au moins selon les deux approches qui suivent.

Selon une première approche, la structure alvéolaire peut être pré-assemblée par mise en œuvre des étapes de drapage et d'extraction. La structure alvéolaire ainsi pré-assemblée peut ensuite être fixée aux peaux pour former le panneau.

Selon une deuxième approche, le procédé peut comprendre une étape de fabrication de l'au moins un élément de moule dans un matériau fugitif. Selon cette deuxième approche, l'étape d'extraction comprend une étape de traitement thermique et/ou chimique agencée pour éliminer le matériau fugitif. Le matériau fugitif peut par exemple être un matériau apte à être éliminé sous l'effet de la chaleur. Par exemple, le matériau fugitif peut comprendre un matériau thermoplastique tel que par exemple du polyéthylène, ou un polyméthacrylate de méthyle (« PMMA »), ou un matériau thermodurcissable par exemple à base d'époxy ou de mousse polyuréthane, ou encore un métal à bas point de fusion par exemple à base de plomb ou d'étain. Selon le matériau fugitif choisi, son élimination peut notamment être réalisée par combustion, oxydation, fusion, évaporation ou sublimation.

Selon encore un autre aspect, l'invention concerne un dispositif de moule pour fabriquer un tel panneau à l'aide d'un tel procédé. Ce dispositif de moule comprend des éléments de moule polyédriques en matériau fugitif, chaque élément de moule comportant des faces latérales, une face supérieure et une face inférieure. Ces éléments de moule sont agencés pour recevoir au moins un pli de sorte que :
- une partie centrale de l'au moins un pli puisse être disposée sur au moins une partie d'au moins une face latérale d'au moins un élément de moule,
- une partie périphérique de l'au moins un pli puisse être disposée sur au moins une partie de la face supérieure et/ou inférieure d'au moins un élément de moule,
ce dispositif comprenant en outre des canaux agencés pour évacuer le matériau fugitif lorsque celui-ci subit une traitement thermique et/ou chimique.

Selon l'invention, ce dispositif comprend en outre des canaux agencés pour évacuer le matériau fugitif lorsque celui-ci subit une traitement thermique et/ou chimique.

D'autres caractéristiques et avantages de l'invention apparaîtront à la lecture de la description nullement limitative qui suit et des figures annexées, dans lesquelles :
- La figure 1 est une vue schématique en perspective d'une nacelle de turboréacteur d'aéronef ;
- La figure 2 est une vue schématique en perspective d'un panneau selon l'invention ;
- La figure 3 est une vue schématique en perspective, partiellement écorchée, de plis d'une structure alvéolaire d'un panneau selon l'invention, les plis étant disposés sur des éléments de moule ;
- La figure 4 est une vue schématique partielle en coupe de côté d'un panneau selon l'invention ;
- La figure 5 est une vue schématique partielle en coupe de côté d'un panneau selon l'invention ;
- La figure 6 est une vue schématique en perspective, partiellement écorchée, de plis d'une structure alvéolaire d'un panneau selon l'invention, les plis étant disposés sur des éléments de moule ;
- La figure 7 est une vue schématique en perspective d'éléments de moule ;
- La figure 8 est une vue schématique partielle en coupe de côté montrant un pli disposé sur des éléments de moule de la figure 7 suivant une coupe A-A ;
- La figure 9 est une vue schématique partielle en coupe de côté montrant deux plis disposés sur des éléments de moule de la figure 7 suivant une coupe B-B ;
- La figure 10 est une vue schématique partielle en coupe de côté montrant un pli disposé sur des éléments de moule de la figure 7 suivant une coupe C-C ;
- La figure 11 est une vue schématique partielle en coupe de côté montrant un pli disposé sur des éléments de moule de la figure 7 suivant une coupe D-D ;
- La figure 12 est une vue schématique partielle en coupe de côté d'un panneau selon l'invention ;
- La figure 13 est une vue schématique partielle en coupe de côté d'un panneau selon l'invention ;
- La figure 14 est une vue schématique en perspective du dessus d'un élément de moule drapé avec un pli ;
- La figure 15 est une vue schématique en perspective du dessous de l'élément de moule et du pli de la figure 14 ;
- La figure 16 est une vue schématique en perspective du dessus de deux éléments de moule adjacents, drapés chacun avec un pli respectif ;
- La figure 17 est une vue schématique du dessus d'éléments de moule adjacents, drapés chacun avec un pli respectif ;
- La figure 18 est une vue schématique du dessus d'un élément de moule et d'un pli, définissant un premier sous-ensemble ;
- La figure 19 est une vue schématique du dessus du premier sous-ensemble de la figure 18 auquel sont adjoints deux éléments de moule supplémentaires, définissant un deuxième sous-ensemble ;
- La figure 20 est une vue schématique du dessus du deuxième sous-ensemble de la figure 19 auquel est adjoint un pli supplémentaire, définissant un troisième sous-ensemble ;
- La figure 21 est une vue schématique du dessus du troisième sous-ensemble de la figure 20 auquel sont adjoints trois éléments de moule supplémentaires ;
- La figure 22 est une vue schématique du dessus d'un pli agencé pour draper lesdits trois éléments de moule supplémentaires de la figure 21 ;
- La figure 23 est une vue schématique en perspective du dessus de cinq éléments de moule adjacents ;
- La figure 24 est une vue schématique en perspective du dessus, partiellement écorchée, des éléments de moule de la figure 23 drapés avec deux plis qui se distinguent l'un de l'autre par l'orientation de leur texture ;
- La figure 25 est une vue schématique de côté, partiellement écorchée, de deux plis, qui se distinguent l'un de l'autre par l'orientation de leur texture, agencés pour draper les éléments de moule de la figure 23 ;
- La figure 26 est une vue schématique de côté d'un pli avec prédécoupes ;
- La figure 27 est une vue schématique en perspective, partiellement éclatée, de trois rangées d'éléments de moule et de plis respectifs ;
- Les figures 28 à 31 sont des vues schématiques partielles en coupe de côté de panneaux selon l'invention.

De manière générale, les éléments identiques ou similaires sont repérés par des signes de référence identiques sur l'ensemble des figures. Certains éléments similaires sont toutefois repérés par des signes de référence qui leur sont propres afin de faciliter leur description.

L'invention se rapporte à un panneau pour nacelle d'ensemble propulsif d'aéronef.

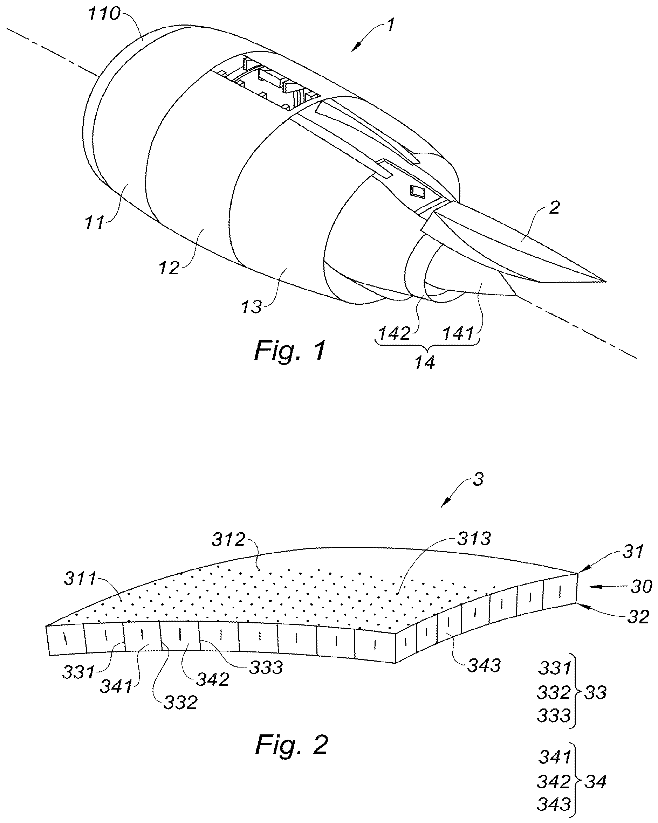

Un exemple de nacelle 1 de turboréacteur (non représenté) d'aéronef (non représenté) est illustré à la figure 1. Cette nacelle 1 comprend un pylône 2 destiné à être fixé à une aile (non représentée) de l'aéronef. La nacelle 1 comprend une section amont 11 dotée d'une lèvre 110 formant une entrée d'air. Cette section amont 11 est adaptée pour permettre la captation optimale vers le turboréacteur de l'air nécessaire à l'alimentation d'une soufflante (non représentée) et de compresseurs internes (non représentés) du turboréacteur. La nacelle 1 comporte aussi une section médiane 12 recevant la soufflante ainsi qu'une section aval 13. Sous le pylône 2 et en aval du turboréacteur, la nacelle 1 comprend une tuyère d'échappement 14 comportant un cône d'éjection de gaz 141 (« plug » en anglais) et une buse primaire 142 (« nozzle » en anglais). Le cône d'éjection 141 et la buse primaire 142 de la tuyère d'échappement 14 définissent un passage pour un flux d'air chaud sortant du turboréacteur.

Une telle nacelle 1 et notamment une telle tuyère d'échappement 14 comportent typiquement des panneaux structuraux du type « panneaux sandwiches » qui assurent généralement aussi une fonction de traitement acoustique afin d'atténuer le bruit généré par le turboréacteur.

L'invention ne vise toutefois pas uniquement des applications pour cône d'éjection ou buse primaire de tuyère d'échappement. De manière non limitative, un panneau selon l'invention peut aussi être utilisé pour équiper un mélangeur (« mixer » en anglais ; non représenté) de la tuyère d'échappement 14, ou encore pour habiller le pylône 2 et/ou des conduits avals internes (non représentés) d'une nacelle. De manière plus générale, l'invention vise toute nacelle d'ensemble propulsif d'aéronef, qu'il s'agisse d'une nacelle dite sous aile comme présentée à la figure 1, ou d'une nacelle le long de fuselage (non représenté), ou d'une nacelle de turbomachine d'aéronef (par exemple d'hélicoptère).

Ces panneaux structuraux et/ou acoustiques peuvent être des panneaux conformes à la description qui suit.

En référence à la figure 2, l'invention propose un panneau 3 comprenant deux peaux 31 et 32, et une structure alvéolaire 30 entre ces deux peaux 31 et 32.

La structure alvéolaire 30 comprend des cloisons transversales 33 (incluant notamment les cloisons 331, 332 et 333) délimitant des alvéoles 34 (incluant notamment les alvéoles 341, 342 et 343).

Dans cet exemple, la peau 31 est une peau acoustique comprenant des perforations 311-313 mettant en communication les alvéoles 34 avec un volume extérieur du panneau 3. Lorsque ce panneau 3 équipe ou constitue par exemple le cône d'éjection de gaz 141 d'une nacelle 1 de turboréacteur d'aéronef, ce volume extérieur du panneau 3 délimite au moins en partie ledit passage acheminant le flux d'air chaud sortant du turboréacteur.

Afin notamment de supporter les températures d'un tel flux d'air chaud, ou plus généralement les contraintes thermiques et mécaniques d'une nacelle 1 d'ensemble propulsif d'aéronef, les peaux 31 et 32 sont dans cet exemple des peaux fibreuses, comprenant des fibres d'un matériau céramique.

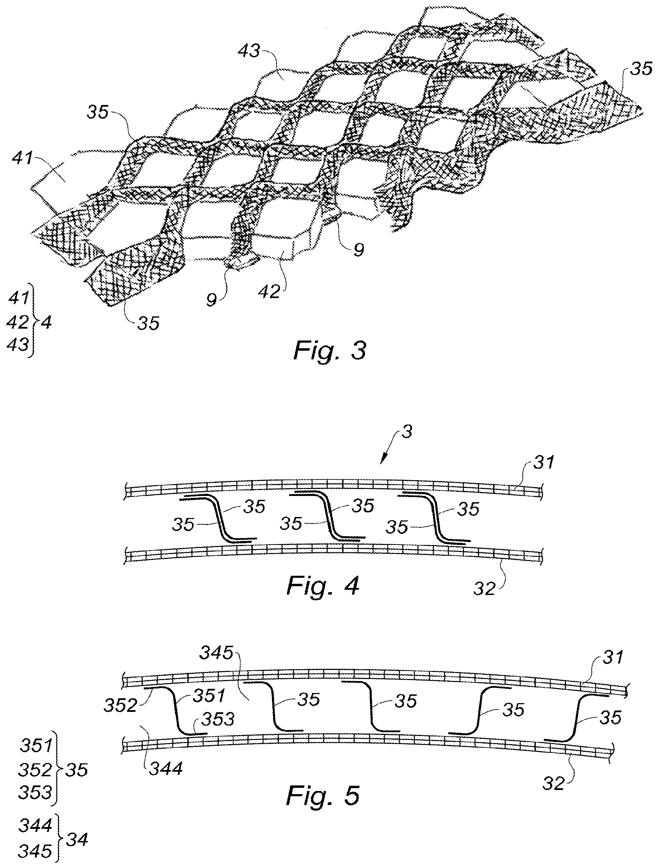

Selon l'invention, le panneau 3 comprend des plis 35 (voir par exemple les figures 3 à 6 et 8 à 13).

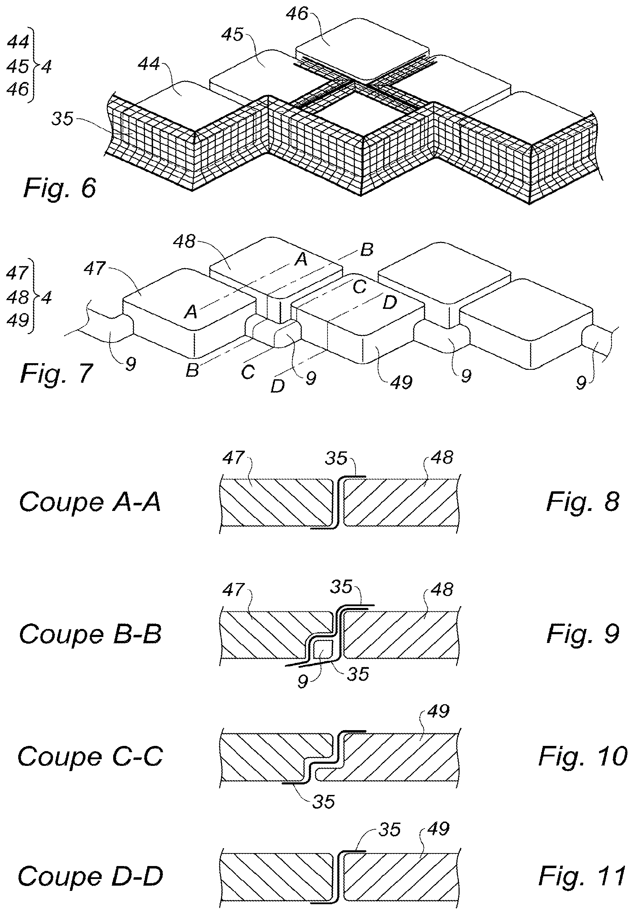

Les figures 3 et 6 montrent des plis 35 formant une structure continue enveloppant des éléments de moule 4 (incluant les éléments de moule 41, 42 et 43 dans la figure 3, et les éléments de moule 44, 45, 46 dans la figure 6). Comme cela est détaillé ci-dessous, après drapage avec des plis 35, les éléments de moule 4 sont extraits de sorte que les espaces libérés par leur extraction définissent les alvéoles 34 qui constituent, avec les plis 35, ladite structure alvéolaire 30 du panneau 3.

Selon l'invention, chaque pli 35 comporte :
- au moins une partie centrale s'étendant transversalement de manière à former au moins une partie d'au moins une cloison transversale 33, et
- au moins une partie périphérique s'étendant le long de l'une au moins des peaux 31 et/ou 32.

Dans l'exemple de la figure 5 qui illustre schématiquement, en vue partielle de côté, un panneau selon l'invention, les plis 35 montrés sur cette figure comportent chacun une unique partie centrale 351 et deux parties périphérique 352 et 353.

Selon la terminologie adoptée dans le présent document, et comme cela a déjà été précisé dans le présent document, une partie de pli est dite « centrale » ou « périphérique » relativement à la localisation de cette partie dans le panneau 3.

Ainsi dans l'exemple de la figure 5, la partie centrale 351 s'étend transversalement entre les deux peaux 31 et 32, et forme une cloison transversale délimitant par exemple deux alvéoles 344 et 345. Les parties périphériques 352 et 353 s'étendent respectivement le long des peaux 31 et 32. En l'occurrence, la partie périphérique 352 s'étend le long de la peau 31 et la partie périphérique 353 s'étend le long de la peau 32.

Comme cela ressort de la figure 4, les cloisons transversales peuvent comprendre localement ou globalement plus d'un pli 35, ici deux plis 35 superposés.

Plus généralement, une partie centrale d'un pli 35 peut former une partie seulement d'une cloison transversale, une autre partie de cette cloison transversale pouvant être formée par un ou plusieurs autres plis 35.

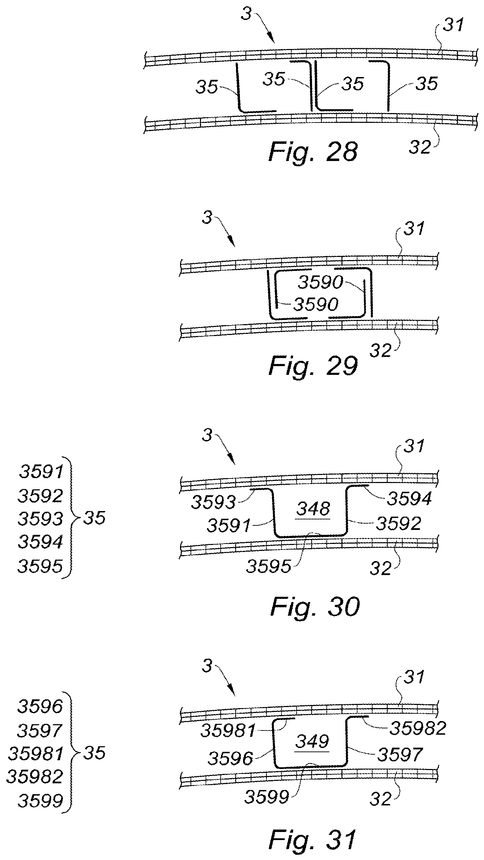

Il ressort en outre des exemples des figures 4 et 5 que ladite partie centrale d'un pli 35 peut s'étendre transversalement depuis l'une des peaux 31 jusqu'à l'autre peau 32. Une telle caractéristique est généralement préférable pour améliorer la tenue structurale du panneau 3. Toutefois, une cloison transversale pouvant être formée par plusieurs plis, par exemple empilées en couches (exemple des figures 4 et 29), l'un ou plusieurs des plis formant partie de cette cloison transversale peuvent s'étendre transversalement sur une partie seulement de l'épaisseur du panneau 3, c'est-à-dire s'étendre depuis l'une des peaux vers l'autre peau mais pas nécessairement jusqu'à cette autre peau (voir les plis 3590 de la figure 29). Autrement dit, certains plis du panneau peuvent constituer des cornières. Néanmoins et de manière générale, il est préférable mais non obligatoire que chaque cloison transversale comprenne au moins un pli ayant une partie centrale s'étendant transversalement depuis l'une des peaux jusqu'à l'autre peau, tel qu'illustré notamment aux figures 4 et 5.

Plusieurs agencements des parties périphérique(s) et centrale(s) de pli peuvent être envisagés.

Un premier type d'agencement de pli est celui illustré notamment aux figures 4 et 5 montrant des panneaux dont les plis 35 comprennent chacun une partie centrale 351 et deux parties périphériques 352 et 353 (voir plus spécifiquement la figure 5). Dans cet exemple, la partie centrale 351 s'étend transversalement depuis la peau 31 jusqu'à la peau 32. Selon ce premier type d'agencement, un tel pli 35 comprend une partie périphérique 352 qui s'étend le long de la peau 31 de manière à délimiter une partie de l'alvéole 344, et une deuxième partie périphérique 353 qui s'étend le long de la peau 32 de manière à délimiter une partie de l'alvéole 345, cette alvéole 345 étant adjacente à l'alvéole 344. Ainsi, les plis 35 des panneaux des figures 4 et 5 ont une forme en « Z », la barre oblique du « Z » représentant la partie centrale 351 du pli 35, les barres horizontales du « Z » représentant respectivement les parties périphériques 352 et 353 du pli 35.

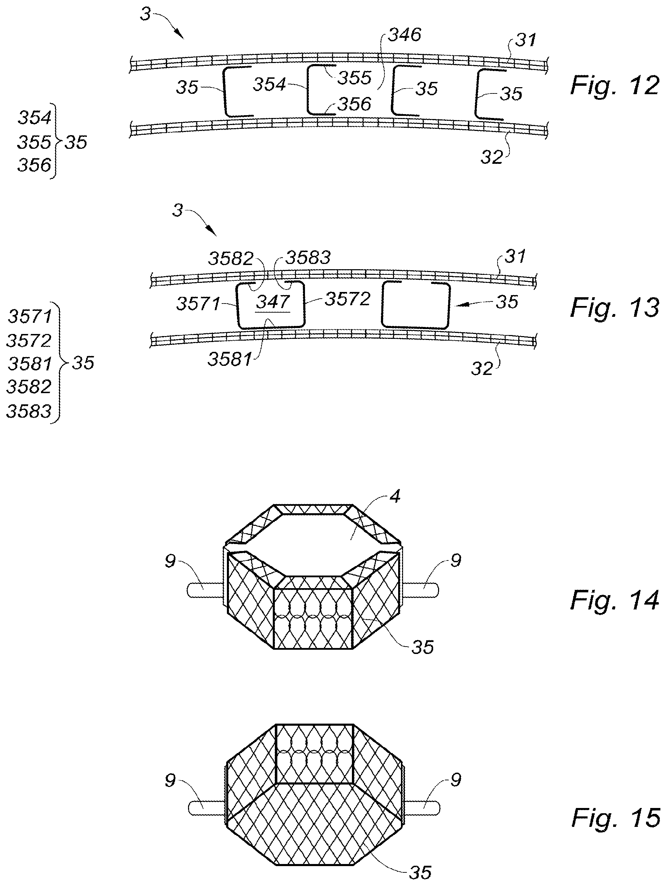

Un deuxième type d'agencement de pli est celui illustré à la figure 12, montrant un panneau 3 dont les plis 35 comprennent chacun une partie centrale 354 et deux parties périphériques 355 et 356. Dans cet exemple, la partie centrale 354 s'étend transversalement depuis la peau 31 jusqu'à la peau 32. Selon ce deuxième type d'agencement, un tel pli 35 comprend une partie périphérique 355 qui s'étend le long de la peau 31 de manière à délimiter une partie de l'alvéole 346, et une deuxième partie périphérique 356 qui s'étend le long de la peau 32 de manière à délimiter une partie de cette même alvéole 346. Ainsi, les plis 35 du panneau 3 de la figure 12 ont une forme en « C », la partie sensiblement verticale du « C » représentant la partie centrale 354 du pli 35, les parties sensiblement horizontales du « C » représentant les parties périphériques 355 et 356 du pli 35.

Un troisième type d'agencement de pli est celui illustré aux figures 13 à 17. En référence plus spécifiquement à l'exemple de la figure 13, les plis 35 du panneau 3 comprennent chacun deux parties centrales 3571 et 3572 et au moins une partie périphérique. Dans cet exemple, les plis 35 comprennent chacun trois parties périphériques 3581, 3582 et 3583. Dans un autre mode de réalisation non représenté, conforme à ce troisième type d'agencement, le pli 35 peut comprendre deux parties centrales 3571 et 3572 et une unique partie périphérique 3581. Plus spécifiquement, dans l'exemple de la figure 13, la partie centrale 3571 s'étend transversalement de manière à former au moins une partie d'au moins une première cloison transversale de l'alvéole 347. La partie centrale 3572 s'étend transversalement de manière à former au moins une partie d'au moins une deuxième cloison transversale de cette même alvéole 347. La partie périphérique 3581 s'étend le long de la peau 32 de manière à délimiter une partie de cette même alvéole 347. Les parties périphériques 3582 et 3583 s'étendent le long de la peau 31 de manière à délimiter une partie de cette même alvéole 347. Ainsi, selon ce troisième type d'agencement, les plis 35 ont une forme sensiblement en « U » ou « Ω », les parties verticales du « U » ou de l' « Ω » représentant les parties centrales 3571 et 3572 du pli 35, la partie sensiblement horizontale de base du « U » ou sommet de l' « Ω », représentant la partie périphérique 3581 du pli 35 et les bases latérales du « Ω » représentant les parties périphériques 3582 et 3583.

Une variante de ce troisième type d'agencement de pli est illustrée à la figure 30 qui représente un unique pli. Ce pli comprend deux parties centrales 3591 et 3592 et trois parties périphériques 3593, 3594 et 3595. La partie centrale 3591 s'étend transversalement de manière à former au moins une partie d'au moins une première cloison transversale de l'alvéole 348. La partie centrale 3592 s'étend transversalement de manière à former au moins une partie d'au moins une deuxième cloison transversale de cette même alvéole 348. La partie périphérique 3595 s'étend le long de la peau 32 de manière à délimiter une partie de cette même alvéole 348. Les parties périphériques 3593 et 3594 s'étendent le long de la peau 31 de manière à délimiter une partie de deux alvéoles respectives adjacentes à l'alvéole 348.

Une autre variante de ce troisième type d'agencement de pli est illustrée à la figure 31 qui représente un unique pli. Ce pli comprend deux parties centrales 3596 et 3597 et trois parties périphériques 35981, 35982 et 3599. La partie centrale 3596 s'étend transversalement de manière à former au moins une partie d'au moins une première cloison transversale de l'alvéole 349. La partie centrale 3597 s'étend transversalement de manière à former au moins une partie d'au moins une deuxième cloison transversale de cette même alvéole 349. La partie périphérique 3599 s'étend le long de la peau 32 de manière à délimiter une partie de cette même alvéole 349. La partie périphérique 35981 s'étend le long de la peau 31 de manière à délimiter une partie de cette même alvéole 349. La partie périphérique 35982 s'étend le long de la peau 31 de manière à délimiter une partie d'une alvéole adjacente à l'alvéole 349.

Un quatrième type d'agencement de pli est celui illustré à la figure 28 montrant un panneau 3 dont les plis 35 comprennent chacun une partie centrale et une partie périphérique. Dans cet exemple, la partie centrale s'étend transversalement depuis la peau 31 jusqu'à la peau 32. La partie périphérique s'étend le long de l'une des peaux de manière à délimiter une partie d'une alvéole. Les plis 35 du panneau 3 de la figure 28 ont une forme en « L », la barre verticale du « L » représentant la partie centrale du pli 35, la barre horizontale du « L » représentant la partie périphérique du pli 35.

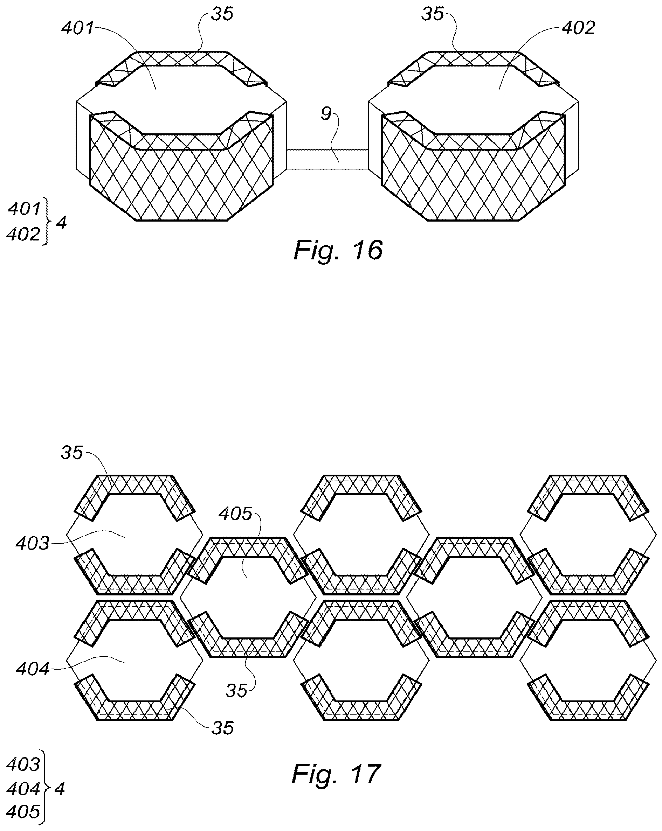

Les figures 14 à 17 montrent un (figures 14 et 15) ou plusieurs (figures 16 et 17) éléments de moule 4 (incluant les éléments de moule 401 et 402 dans la figure 16, et les éléments de moule 403-405 dans la figure 17). Chacun de ces éléments de moule 4 est dans cet exemple drapé avec un pli 35 selon le troisième type d'agencement de pli décrit ci-dessus.

Bien entendu, ces différents types d'agencement de pli peuvent être combinés au sein d'un même panneau (non représenté).

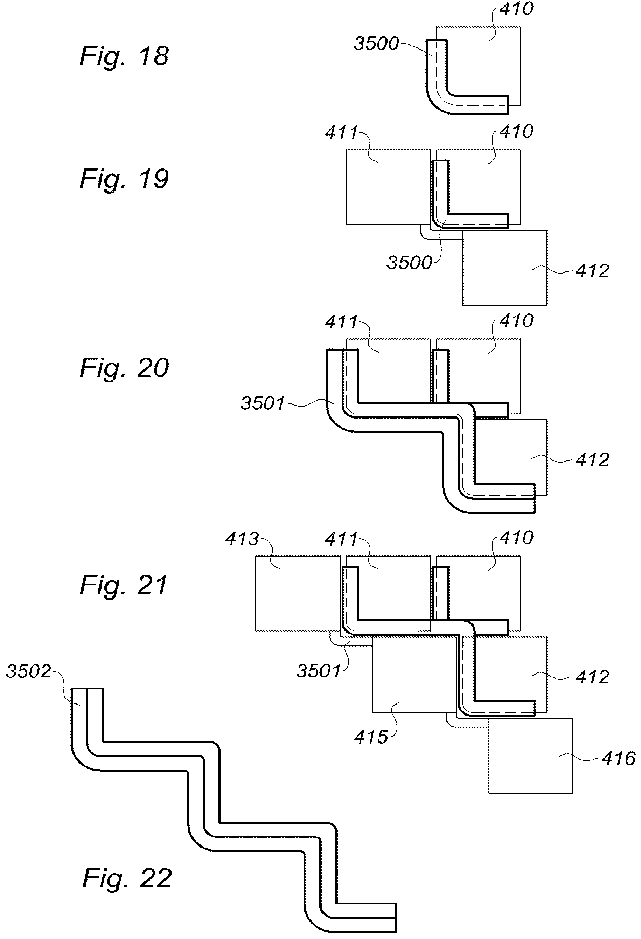

De plus, comme cela se déduit des figures 18 à 22, la partie centrale d'un pli peut s'étendre longitudinalement de manière à former au moins une partie de plusieurs cloisons transversales adjacentes. Dans cet exemple, le pli 3500 recouvre une partie de l'élément de moule 410 (figure 18). Ce pli 3500 forme au moins une partie des cloisons transversales délimitant, d'une part les éléments de moule 410 et 411 et, d'autre part, les éléments de moule 410 et 412 (figure 19). Le pli 3501 recouvre une partie respective des éléments de moule 411 et 412 (figure 20), et recouvre aussi une petite partie du pli 3500 en regard de la partie d'élément de moule 410 entre les éléments 411 et 412. Ce pli 3501 forme au moins une partie des cloisons transversales délimitant respectivement les éléments de moule 411 et 413, 411 et 415, 412 et 415, et 412 et 416 (figure 21). Selon le même principe, le pli 3502, représenté isolément à la figure 22, peut recouvrir une partie des éléments de moule 413, 415 et 416, et de petites parties du pli 3501 en regard de la partie d'élément de moule 411 entre les éléments de moule 413 et 415 et de la partie d'élément de moule 412 entre les éléments de moule 415 et 416.

Ce type de disposition fournit avantageusement, tout à la fois, la constitution d'alvéoles séparées dont les parois sont continument renforcées, et dont la continuité de transfert d'efforts avec les faces est également réalisée.

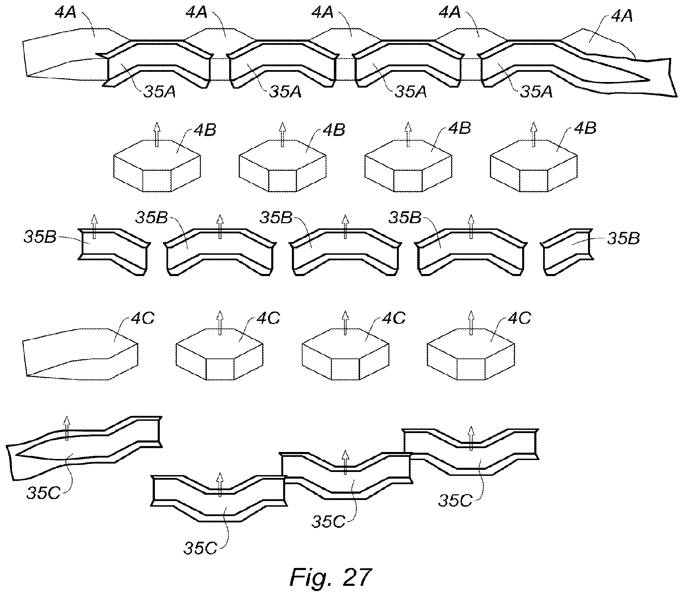

La figure 27 montre un autre exemple d'agencement et de positionnement de plis 35A-35C relativement à des éléments de moule 4A-4C. Seules trois rangées d'éléments de moule (et de plis correspondants) ont été représentées pour des raisons illustratives. Les éléments de moule 4A constituent une première rangée et sont drapés avec des plis 35A. Les éléments de moule 4B constituant une deuxième rangée sont placés contre les plis 35A et sont drapés avec des plis 35B. Les éléments de moule 4C constituant une troisième rangée sont placés contre les plis 35B et sont drapés avec des plis 35C et ainsi de suite.

Dans cet exemple, les éléments de moule 4A-4C, vus de dessus, ont une forme sensiblement hexagonale, comprenant quatre grandes parois latérales et deux petites parois, la dimension des petites parois correspondant à la distance de séparation entre deux éléments de moule de la même rangée. Les plis 35A, 35B et 35C sont ainsi disposés qu'ils font chacun la séparation entre, d'une part, trois parois latérales adjacentes d'un même premier élément de moule (incluant deux grandes parois latérales et une petite paroi latérale), d'autre part, une petite paroi latérale d'un deuxième élément de moule et, d'autre part encore, au moins une grande paroi latérale d'un troisième et/ou quatrième élément de moule.

Dans une première variante, les extrémités de deux plis successifs de la même rangée ne se recouvrent pas (cas des plis 35A et 35B). Chaque alvéole est alors rendue indépendante par un pli de la rangée suivante, plus précisément par sa partie centrale recouvrant une petite paroi latérale de l'élément de moule correspondant et couvrant partiellement des parties centrales voire également périphériques de plis de la rangée précédente.

Dans une deuxième variante, les extrémités de plis successifs d'une même rangée se recouvrent les uns les autres, complétant l'isolation des alvéoles réalisée par les parties de plis drapés sur les petites parois latérales d'éléments de moule.

Dans différentes variantes encore (non exclusives des précédentes), les plis sont installés en creux entre deux éléments de moule (cas des plis 35A et 35B), ou les plis sont installés en bosse couvrant un seul élément de moule (cas des plis 35C).

On s'arrangera de préférence pour que la dimension des petites parois latérales soit suffisante pour permettre à deux plis installés en creux (voir paragraphe précédent) de se recouvrir au moins partiellement sur une petite paroi latérale afin d'assurer une bonne isolation entre alvéoles adjacentes dont les cloisons transversales qui les séparent comprennent de tels plis.

Ainsi, la structure « continue » qui enveloppe les éléments de moule 4 de la figure 3 peut comprendre ou être formée d'un ou de plusieurs plis, ces plis pouvant s'étendre entre plusieurs éléments de moule 4. Cette dernière caractéristique permet de renforcer la tenue structurale du panneau 3 dont la structure alvéolaire 30 comprend ou est formée de plis 35 ainsi étendus.

La séquence respectivement illustrée aux figures 18 à 22 indique une approche générique possible pour fabriquer un panneau selon l'invention.

Plus spécifiquement, l'invention propose un procédé de fabrication comprenant une étape de drapage dans laquelle au moins un pli est disposé sur au moins un élément de moule polyédrique.

Les figures 6, 7 et 18 à 21 montrent des éléments de moule sensiblement parallélépipédiques (voir par exemple les éléments de moule 47-49 à la figure 7). Dans les figures 18 à 21, la vue de dessus des éléments de moule fait uniquement apparaître une face supérieure de ces éléments de moule.

Les figures 3 et 14 à 17 montrent des éléments de moule comprenant une face supérieure et une face inférieure parallèle entre elles, ainsi que six faces latérales sensiblement perpendiculaires aux faces supérieure et inférieure.

Plus généralement, l'au moins un élément de moule mis en œuvre dans le procédé selon l'invention comprend une face supérieure et une face inférieure, ainsi que des faces latérales en nombre adapté à la géométrie souhaitée des alvéoles.

Selon l'invention, lors de l'étape de drapage, une partie centrale de l'au moins un pli est disposée sur au moins une partie d'au moins une face latérale de l'au moins un élément de moule. De plus, lors de cette étape de drapage, une partie périphérique de l'au moins un pli est disposée sur au moins une partie de la face supérieure et/ou inférieure de l'au moins un élément de moule.

Il ressort de la description qui précède, relative notamment aux figures 18 à 22 et à la figure 27, qu'un tel procédé permet de draper successivement et/ou parallèlement plusieurs éléments moule et/ou plusieurs rangées d'éléments de moule de manière relativement simple.

De préférence, les éléments de moule sont successivement disposés en étant décalés les uns par rapport aux autres (ou en quinconce), comme le montrent notamment les exemples des figures 6, 7 et 21. En particulier, deux éléments de moule de forme identique peuvent être décalés l'un par rapport à l'autre de sorte qu'aucune droite ne passe à la fois par une face latérale de l'un de ces éléments de moule et par une face latérale de l'autre élément de moule. Un tel décalage est de préférence agencé de manière à permettre qu'au moins une partie de la partie centrale d'un pli installé sur un ou plusieurs éléments de moule d'une première rangée recouvre au moins une partie centrale d'un ou plusieurs plis installés sur un ou plusieurs éléments de moule d'une deuxième rangée adjacente à la première rangée. Cela permet aussi d'améliorer l'isolation entre alvéoles et permet d'assurer une bonne transmission des efforts mécaniques d'une cloison transversale à l'autre.

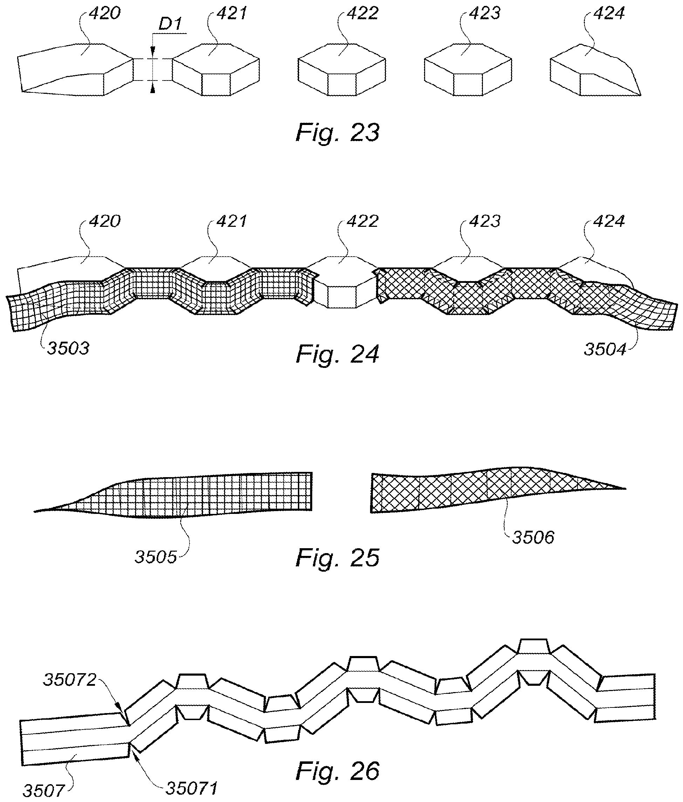

La figure 23 montre des éléments de moule 420 à 424 constituant une rangée d'éléments de moule, qui peuvent être drapés par des plis 3503 et 3504 illustrés à la figure 24. On considère ci-après l'épaisseur des éléments de moule 420 à 424 comme leur dimension de bas en haut de la figure 23, représentée par la dimension D1, l'épaisseur de ces éléments de moule définissant une profondeur des alvéoles qu'elles vont constituer. La figure 23 montre que les éléments de moule 421 à 423 ont chacun une épaisseur sensiblement constante, tandis que les éléments de moule 420 et 424 ont une forme biseautée, leur épaisseur diminuant vers l'extérieur de la rangée : l'épaisseur de l'élément de moule 420 diminue vers la gauche de la figure 23 et l'épaisseur de l'élément de moule 424 diminue vers la droite de la figure 23. Une telle forme biseautée permet de constituer des alvéoles d'extrémité du panneau permettant aux peaux de se rejoindre de manière à constituer un retour monolithique (non représenté). Les figures 3 et 27 montrent aussi des éléments de moule ainsi biseautés, par exemple l'élément de moule 41 (figure 3) et l'élément de moule 4C (figure 27, élément de moule situé à gauche).

En présence d'un tel retour monolithique, une extrémité d'un ou de plusieurs pli, par exemple l'extrémité du pli 3503 située vers la gauche de la figure 24, peut être pincée entre les deux peaux du panneau (non représenté). Dans cet exemple, cette extrémité de pli est agencée pour s'étendre à la fois le long de l'une des peaux du panneau et, sur son autre face, le long de l'autre peau du panneau.

On utilisera de préférence des plis textiles fibreux, comprenant plus préférentiellement des fibres d'un matériau céramique.

Les plis peuvent par exemple comprendre un complexe de deux couches de matériau entrecroisées de manière à définir un maillage ou une texture formée par des groupes de fibres sensiblement perpendiculaires entre eux. Les plis peuvent aussi comprendre deux couches de fibres superposées selon deux directions distinctes, ou des structures de fibres tissées (typiquement, orientées selon deux directions sensiblement perpendiculaire l'une par rapport à l'autre) ou tressées (pouvant par exemple comporter deux ou trois directions de fibres).

Ainsi, le pli 3503 de la figure 24 et le pli 3505 de la figure 25 comprennent chacun un maillage doté d'un groupe de fibres inclinées à 0° par rapport à la surface supérieure de l'élément de moule 421 par exemple et doté d'un groupe de fibres inclinées à 90° par rapport à la surface supérieure de cet élément de moule 421.

Le pli 3504 de la figure 24 et le pli 3506 de la figure 25 comprennent chacun un maillage doté d'un groupe de fibres inclinées à -45° par rapport à la surface supérieure de l'élément de moule 423 par exemple et doté d'un groupe de fibres inclinées à +45° par rapport à la surface supérieure de cet élément de moule 423.

Les plis peuvent être découpés dans des bandes de tissu. Pour des bandes de tissu comprenant deux groupes de fibres sensiblement perpendiculaires entre eux, l'obtention des inclinaisons décrites ci-dessus peut être obtenue par réalisation de découpe selon une orientation choisie en conséquence.

De plus, comme illustré à la figure 26, lors de la découpe d'un pli 3507, on peut prévoir des ouvertures 35071 et 35072, ou prédécoupes, pour faciliter le drapage sur les éléments de moule et/ou pour obtenir un drapage homogène sur différentes faces d'un même élément de moule et/ou sur différentes faces de différents éléments de moule.

Le procédé selon l'invention comprend aussi une étape d'extraction de l'au moins un élément de moule.

Cette étape d'extraction est réalisée après l'étape de drapage.

Pour pouvoir extraire l'au moins un élément de moule, on fabrique de préférence celui-ci dans un matériau fugitif. L'extraction en tant que telle, c'est-à-dire l'élimination du matériau fugitif, peut être réalisée selon des principes connus dans l'état de la technique antérieure, par exemple décrits dans le document FR 3 039 148 A1.

Ainsi, selon une approche décrite dans le document FR 3 039 148 A1, des éléments de moule peuvent être drapés avec des plis secs qui sont ensuite soumis à une infiltration liquide. Les plis et les éléments de moule peuvent ensuite être soumis à des étapes de séchage, de chauffage pour l'élimination du matériau fugitif, puis de frittage.

Selon une autre approche, des éléments de moule peuvent être drapés avec des plis pré-imprégnés. Les plis et les éléments de moule peuvent ensuite être soumis à des étapes de séchage (par exemple sous Autoclave), de chauffage pour l'élimination du matériau fugitif, puis de frittage.

Selon encore une autre approche, les deux approches qui viennent d'être décrites peuvent être combinées.

Plus spécifiquement, l'étape d'extraction peut comprendre une étape de traitement thermique et/ou chimique agencée pour éliminer le matériau fugitif. Pour éliminer le matériau fugitif par traitement thermique, celui-ci peut comprendre un matériau tel que sa température de ramollissement sous charge soit supérieure à la température de consolidation de la préforme et sa matrice, et inférieure à la température de frittage ou de dégradation de la préforme et sa matrice. Le matériau fugitif peut être pris par exemple parmi les matériaux thermoplastiques tel que du polyéthylène ou du polyméthacrylate de méthyle « PMMA », ou un matériau thermodurcissable par exemple à base d'époxy ou encore à base de mousse de polyuréthane ou de mousse de polychlorure de vinyle, ou encore un métal à bas point de fusion par exemple à base de plomb ou d'étain. Selon le matériau fugitif choisi, son élimination peut notamment être réalisée par combustion, oxydation, fusion, évaporation ou sublimation.

Afin d'évacuer le matériau fugitif, on peut relier des éléments de moule entre eux à l'aide d'un réseau de canaux 9 représentés aux figures 3, 7, 9, et 14 à 16. Plus particulièrement, la figure 7 montre un dispositif de moule comprenant de tels canaux 9. Ces canaux 9 peuvent relier des éléments de moule en plaçant les canaux en toute position des éléments de moule. Par exemple, dans l'exemple de la figure 7, les éléments de moule 47 et 49 sont reliés par un canal 9 positionné vers le bas de ces éléments de moule compte tenu de leur orientation dans cette figure. Le cas échéant, lors du drapage des éléments de moule, des plis peuvent être disposés autour des canaux 9, comme illustré à la figure 9.

Les canaux 9 constituent ainsi une liaison entre éléments de moule et peuvent aussi être utilisés pour positionner des éléments de moule lors de leur assemblage.

Dans un mode de réalisation du dispositif de moule, les éléments de moule peuvent comprendre un ou plusieurs picots sur leur face supérieure et/ou inférieure afin de perforer l'une et/ou l'autre peau lors de l'assemblage du dispositif de moule avec les peaux (non représenté). Un exemple d'éléments de moule avec picots est décrit dans le document FR 3 039 148 A1.

Dans un mode de mise en œuvre du procédé, la structure alvéolaire 30 peut être pré-assemblée par mise en œuvre des étapes de drapage et d'extraction décrites ci-dessus. La structure alvéolaire ainsi pré-assemblée peut ensuite être fixée aux peaux 31 et 32 pour former le panneau 3.

Quelle que soit l'approche retenue pour extraire l'au moins un élément de moule, il ressort de la description qui précède que le procédé selon l'invention permet de former au moins une partie d'au moins une des cloisons transversales du panneau à partir de ladite partie centrale de l'au moins un pli, ladite partie périphérique de l'au moins un pli s'étendant ainsi le long d'au moins une peau du panneau.

En termes dimensionnels, l'homme du métier pourra fabriquer le panneau selon les dimensions usuelles. Par exemple, lorsque le panneau 3 est un panneau acoustique, celui-ci peut avoir une épaisseur comprise entre 5 et 60 mm. Les alvéoles 34, qui constituent dans cet exemple des cavités de Helmholtz, peuvent avoir une dimension comprise entre 3,5 et 150 mm, de préférence comprise entre 5 et 50 mm, cette dimension correspondant au diamètre d'un cylindre inscrit dans une alvéole. L'une des peaux, la peau 31 dans l'exemple de la figure 2, peut comprendre des perforations 311-313. Préférentiellement, ces perforations représentent un pourcentage d'ouverture de la surface de la peau 31 compris entre 3 et 30%. Ces perforations ou d'autres perforations complémentaires peuvent être réalisées avant l'élimination des éléments de moule, ces perforations pouvant alors contribuer à ou faciliter l'extraction des éléments de moule.

Bien entendu, l'invention n'est pas limitée aux exemples qui viennent d'être décrits et de nombreux aménagements peuvent être apportés à ces exemples sans sortir du cadre de l'invention. Par exemple, des orifices peuvent être réalisés dans plis 35 de manière à créer une ouverture entre des alvéoles 34 adjacentes, pour permettre de drainer des fluides lors de la mise en œuvre du panneau 3.

## Revendications

1. Procédé de fabrication d'un panneau (3) pour nacelle (1) d'ensemble propulsif d'aéronef, ce panneau (3) comprenant deux peaux (31, 32) et une structure alvéolaire (30) entre ces deux peaux, la structure alvéolaire (30) comprenant des cloisons transversales (33) délimitant des alvéoles (34), ce procédé comprenant une étape de drapage dans laquelle au moins un pli (35A-35C) est disposé sur au moins un élément de moule polyédrique (4A-4C), l'au moins un élément de moule (4A-4C) comportant des faces latérales, une face supérieure et une face inférieure, où lors de l'étape de drapage :
- une partie centrale de l'au moins un pli (35A-35C) est disposée sur au moins une partie d'au moins une face latérale de l'au moins un élément de moule (4A-4C),
- une partie périphérique de l'au moins un pli (35A-35C) est disposée sur au moins une partie de la face supérieure et/ou inférieure de l'au moins un élément de moule (4A-4C),
et ledit procédé comprenant une étape d'extraction de l'au moins un élément de moule (4A-4C) de manière à définir au moins une alvéole (34) respective, ladite partie centrale de l'au moins un pli (35A-35C) formant au moins une partie d'au moins une desdites cloisons transversales (33) du panneau (3), ladite partie périphérique de l'au moins un pli (35A-35C) s'étendant le long d'au moins une peau (31, 32) du panneau (3).

2. Procédé selon la revendication 1, **caractérisé en ce qu'**il comprend une étape de fabrication de l'au moins un élément de moule (4A-4C) dans un matériau fugitif, et **en ce que** l'étape d'extraction comprend une étape de traitement thermique et/ou chimique agencée pour éliminer le matériau fugitif.

3. Procédé selon la revendication 1 ou 2, **caractérisé en ce que**, pour un ou plusieurs plis (35) du panneau (3), l'au moins une partie centrale (351) s'étend transversalement depuis l'une des peaux (31) jusqu'à l'autre peau (32).

4. Procédé selon l'une des revendications 1 à 3, **caractérisé en ce qu'**un ou plusieurs plis (35) du panneau (3) comportent chacun au moins une première partie périphérique (352) s'étendant le long de l'une des peaux (31) et au moins une deuxième partie périphérique (353) s'étendant le long de l'autre peau (32).

5. Procédé selon l'une des revendications 1 à 4, **caractérisé en ce que**, pour un ou plusieurs plis (35) du panneau (3), ladite première partie périphérique (352) s'étend le long de l'une des peaux (31) de manière à délimiter au moins une partie d'au moins une première alvéole (344), et **en ce que** ladite deuxième partie périphérique (353) s'étend le long de l'autre peau (32) de manière à délimiter au moins une partie d'au moins une deuxième alvéole (345) adjacente à la première alvéole (344).

6. Procédé selon l'une des revendications 1 à 5, **caractérisé en ce que**, pour un ou plusieurs plis (35) du panneau (3), ladite première partie périphérique (355) s'étend le long de l'une des peaux (31) de manière à délimiter au moins une partie d'au moins une alvéole (346), et **en ce que** ladite deuxième partie périphérique (356) s'étend le long de l'autre peau (32) de manière à délimiter au moins une partie de cette même alvéole (346).

7. Procédé selon l'une des revendications 1 à 6, **caractérisé en ce qu'**un ou plusieurs plis (35) du panneau (3) comportent chacun une première partie centrale (3571) s'étendant transversalement de manière à former au moins une partie d'au moins une première cloison transversale d'au moins une alvéole (347) et une deuxième partie centrale (3472) s'étendant transversalement de manière à former au moins une partie d'au moins une deuxième cloison transversale de cette même alvéole (347).

8. Procédé selon l'une des revendications 1 à 7, **caractérisé en ce que**, pour un ou plusieurs plis (3501) du panneau (3), ladite partie centrale s'étend longitudinalement de manière à former au moins une partie de plusieurs cloisons transversales adjacentes.

9. Procédé selon l'une des revendications 1 à 8, **caractérisé en ce que** les plis comprennent des fibres d'un matériau céramique.

10. Procédé selon l'une des revendications 1 à 9, **caractérisé en ce que** les plis sont des plis textiles.

11. Dispositif de moule pour fabriquer un panneau à l'aide d'un procédé selon l'une des revendications 1 à 10, ce dispositif comprenant des éléments de moule polyédriques (47-49) en matériau fugitif, chaque élément de moule comportant des faces latérales, une face supérieure et une face inférieure, ces éléments de moule (47-49) étant agencés pour recevoir au moins un pli de sorte que :
- une partie centrale de l'au moins un pli puisse être disposée sur au moins une partie d'au moins une face latérale d'au moins un élément de moule,
- une partie périphérique de l'au moins un pli puisse être disposée sur au moins une partie de la face supérieure et/ou inférieure d'au moins un élément de moule,
**caracterisé en ce que** ce dispositif comprend en outre des canaux (9) agencés pour évacuer le matériau fugitif lorsque celui-ci subit une traitement thermique et/ou chimique.

## Patentansprüche

1. Verfahren zur Herstellung eines Paneels (3) für eine Gondel (1) einer Flugzeugantriebseinheit, wobei dieses Paneel (3) zwei Häute (31, 32) und eine Wabenstruktur (30) zwischen diesen beiden Häuten umfasst, wobei die Wabenstruktur (30) Querwände (33) umfasst, die Waben (34) begrenzen, wobei dieses Verfahren einen Drapierschritt umfasst, bei dem mindestens eine Falte (35A-35C) auf mindestens einem polyedrischen Formelement (4A-4C) angeordnet ist, wobei mindestens ein Formelement (4A-4C) Seitenflächen aufweist, eine Oberseite und eine Unterseite, wobei beim Drapieren:
- ein mittlerer Teil der mindestens einen Falte (35A-35C) auf mindestens einem Teil mindestens einer Seitenfläche des mindestens einen Formelements (4A-4C) angeordnet ist,
- ein Umfangsteil der mindestens einen Falte (35A-35C) an mindestens einem Teil der Ober- und/oder Unterseite des mindestens einen Formelements (4A-4C) angeordnet ist, und das Verfahren einen Schritt des Extrahierens des mindestens einen Formelements (4A-4C) umfasst, um mindestens eine jeweilige Mulde (34) zu definieren, wobei der mittlere Teil der mindestens einen Falte (35A-35C) mindestens einen Teil mindestens einer der Querwände (33) des Paneels (3) bildet, wobei der Umfangsteil der mindestens einen Falte (35A-35C) sich entlang mindestens einer Haut (31, 32) des Paneels (3) erstreckt.

2. Verfahren nach Anspruch 1, **dadurch gekennzeichnet, dass** es einen Schritt des Herstellens des mindestens einen Formelements (4A-4C) in einem flüchtigen Material umfasst, und dass der Schritt des Extrahierens einen Schritt des thermischen oder chemischen Behandelns umfasst, der zum Entfernen des flüchtigen Materials angeordnet ist.

3. Verfahren nach Anspruch 1 oder 2, **dadurch gekennzeichnet, dass** sich bei einer oder mehreren Falten (35) des Paneels (3) der mindestens eine mittlere Teil (351) quer von einer Haut (31) bis zu der anderen Haut (32) erstreckt.

4. Verfahren nach einem der Ansprüche 1 bis 3, **dadurch gekennzeichnet, dass** eine oder mehrere Falten (35) des Paneels (3) jeweils mindestens einen sich entlang der einen Haut (31) erstreckenden ersten Umfangsteil (352) und mindestens einen sich entlang der anderen Haut (32) erstreckenden zweiten Umfangsteil (353) aufweisen.

5. Verfahren nach einem der Ansprüche 1 bis 4, **dadurch gekennzeichnet, dass** sich für eine oder mehrere Falten (35) des Paneels (3) der erste Umfangsteil (352) entlang der einen Haut (31) erstreckt, um mindestens einen Teil mindestens einer ersten Wabe (344) abzugrenzen, und dass sich der zweite Umfangsteil (353) entlang der anderen Haut (32) erstreckt, um mindestens einen Teil mindestens einer zweiten Wabe (345) benachbart an die erste Wabe (344) abzugrenzen.

6. Verfahren nach einem der Ansprüche 1 bis 5, **dadurch gekennzeichnet, dass** sich für eine oder mehrere Falten (35) des Paneels (3) der erste Umfangsteil (355) entlang der einen Haut (31) erstreckt, um mindestens einen Teil mindestens einer Wabe (346) abzugrenzen, und dass sich der zweite Umfangsteil (356) entlang der anderen Haut (32) erstreckt, um mindestens einen Teil derselben Wabe (346) abzugrenzen.

7. Verfahren nach einem der Ansprüche 1 bis 6, **dadurch gekennzeichnet, dass** eine oder mehrere Falten (35) des Paneels (3) jeweils einen sich quer erstreckenden ersten mittleren Teil (3571) aufweisen, so dass mindestens ein Teil mindestens einer ersten Querwand mindestens einer Wabe (347) gebildet wird, und einen sich quer erstreckenden zweiten mittleren Teil (3472), so dass mindestens ein Teil mindestens einer zweiten Querwand derselben Wabe (347) gebildet wird.

8. Verfahren nach einem der Ansprüche 1 bis 7, **dadurch gekennzeichnet, dass** sich der mittlere Teil für eine oder mehrere Falten (3501) des Paneels (3) längs erstreckt, so dass er mindestens einen Teil mehrerer benachbarter Querwände bildet.

9. Verfahren nach einem der Ansprüche 1 bis 8, **dadurch gekennzeichnet, dass** die Falten Fasern eines keramischen Materials umfassen.

10. Verfahren nach einem der Ansprüche 1 bis 9, **dadurch gekennzeichnet, dass** die Falten textile Falten sind.

11. Formvorrichtung zum Herstellen eines Paneels mit einem Verfahren nach einem der Ansprüche 1 bis 10, wobei diese Vorrichtung polyedrische Formelemente (47-49) aus flüchtigem Material umfasst, wobei jedes Formelement Seitenflächen, eine Oberseite und eine Unterseite aufweist, wobei diese Formelemente (47-49) so angeordnet sind, dass sie mindestens eine Falte aufnehmen, sodass:
- ein mittlerer Teil der mindestens einen Falte auf mindestens einem Teil von mindestens einer Seitenfläche von mindestens einem Formelement angeordnet sein kann,
- ein Umfangsteil der mindestens einen Falte auf mindestens einem Teil der Ober- und/oder Unterseite mindestens eines Formelements angeordnet sein kann, **dadurch gekennzeichnet, dass** diese Vorrichtung ferner Kanäle (9) umfasst, die zum Abführen des flüchtigen Materials angeordnet sind, wenn dieses einer thermischen oder chemischen Behandlung unterzogen wird.

## Claims

1. A method for manufacturing a panel (3) for a nacelle (1) of an aircraft propulsion assembly, this panel (3) comprising two skins (31, 32) and a cellular structure (30) between these two skins, the cellular structure (30) comprising transverse partition walls (33) delimiting cells (34), this method comprising a draping step in which at least one fold (35A-35C) is disposed on at least one polyhedral mold element (4A-4C), the at least one mold element (4A-4C) including lateral faces, an upper face and a lower face, where during the draping step:
- a central portion of the at least one fold (35A-35C) is disposed on at least one portion of at least one lateral face of the at least one mold element (4A-4C),
- a peripheral portion of the at least one fold (35A-35C) is disposed on at least one portion of the upper and/or lower face of the at least one mold element (4A-4C), and
said method comprising
a step of extracting the at least one mold element (4A-4C) so as to define at least one respective cell (34), said central portion of the at least one fold (35A-35C) forming at least one portion of at least one of said transverse partition walls (33) of the panel (3), said peripheral portion of the at least one fold (35A-35C) extending along at least one skin (31, 32) of the panel (3).

2. The method according to claim 1, **characterized in that** it comprises a step of manufacturing the at least one mold element (4A-4C) in a fugitive material, and **in that** the extraction step comprises a heat and/or chemical treatment step arranged to eliminate the fugitive material.

3. The method according to claim 1 or 2, **characterized in that**, for one or several folds (35) of the panel (3), the at least one central portion (351) extends transversely from one of the skins (31) to the other skin (32).

4. The method according to any of claims 1 to 3, **characterized in that** one or several folds (35) of the panel (3) each include at least one first peripheral portion (352) extending along one of the skins (31) and at least one second peripheral portion (353) extending along the other skin (32).

5. The method according to any of claims 1 to 4, **characterized in that**, for one or several folds (35) of the panel (3), said first peripheral portion (352) extends along one of the skins (31) so as to delimit at least one portion of at least one first cell (344), and **in that** said second peripheral portion (353) extends along the other skin (32) so as to delimit at least one portion of at least one second cell (345) adjacent to the first cell (344).

6. The method according to any of claims 1 to 5, **characterized in that**, for one or several folds (35) of the panel (3), said first peripheral portion (355) extends along one of the skins (31) so as to delimit at least one portion of at least one cell (346), and **in that** said second peripheral portion (356) extends along the other skin (32) so as to delimit at least one portion of this same cell (346).

7. The method according to any of claims 1 to 6, **characterized in that** one or several folds (35) of the panel (3) each include a first central portion (3571) extending transversely so as to form at least one portion of at least one first transverse partition wall of at least one cell (347) and a second central portion (3472) extending transversely so as to form at least one portion of at least one second transverse partition wall of this same cell (347).

8. The method according to any of claims 1 to 7, **characterized in that**, for one or several folds (3501) of the panel (3), said central portion extends longitudinally so as to form at least one portion of several adjacent transverse partition walls.

9. The method according to any of claims 1 to 8, **characterized in that** the folds comprise fibers of a ceramic material.

10. The method according to any of claims 1 to 9, **characterized in that** the folds are textile folds.

11. A mold device for manufacturing a panel using a method according to any of claims 1 to 10, this device comprising polyhedral mold elements (47-49) made of fugitive material, each mold element including lateral faces, an upper face, and a lower face, these mold elements (47-49) being arranged to receive at least one fold so that:
- a central portion of the at least one fold can be disposed on at least one portion of at least one lateral face of at least one mold element,
- a peripheral portion of the at least one fold can be disposed on at least one portion of the upper and/or lower face of at least one mold element,
**characterized in that** this device further comprises channels (9) arranged to evacuate the fugitive material when it undergoes heat and/or chemical treatment.
